# EUROPÄISCHE PATENTSCHRIFT

(11) **EP 2 291 439 B1**
(45) Veröffentlichungstag und Bekanntmachung des Hinweises auf die Patenterteilung: **16.10.2013**
(21) Anmeldenummer: 09765885.0
(22) Anmeldetag: 18.06.2009
(51) Int. Cl.: C08J 7/00, B05D 7/24

(54) **DICHTUNGSARTIKEL**
SEALING ITEM
ARTICLE D ÉTANCHÉITÉ

(30) Priorität: 18.06.2008 DE 102008002515
(43) Veröffentlichungstag der Anmeldung: 09.03.2011
(73) Patentinhaber: Fraunhofer-Gesellschaft zur Förderung der angewandten Forschung e.V., 80686 München (DE)
(72) Erfinder: VISSING, Klaus-Dieter, 27321 Morsum (DE); NEESE, Gabriele, 28215 Bremen (DE); BAALMANN, Alfred, 27711 Osterholz-Scharmbeck (DE); STAUGA, Peter, 27337 Blender (DE)
(74) Vertreter: Eisenführ, Speiser & Partner
(86) Internationale Anmeldenummer: PCT/EP2009/057596
(87) Internationale Veröffentlichungsnummer: WO 2009/153306

(56) Entgegenhaltungen:
- WO-A-01/12705
- WO-A-03/002269
- DE-A1-102005 025 253
- DE-A1-102006 018 491

## Beschreibung

Die Erfindung betrifft einen Dichtungsartikel, umfassend ein elastomeres und/oder polymeres Substrat und eine darauf angeordnete plasmapolymere Beschichtung, bestehend aus Kohlenstoff, Silizium, Sauerstoff und Wasserstoff sowie gegebenenfalls üblichen Verunreinigungen in bestimmten Stoffmengenverhältnissen und bevorzugt in einem bestimmten Vernetzungsgrad. Sie betrifft ferner die Verwendung einer bestimmten plasmapolymeren Beschichtung zur Verbesserung der dynamischen Belastbarkeit eines elastomeren und/oder polymeren Substrates sowie ein Verfahren zum Erzeugen eines entsprechenden Dichtungsartikels.

Insbesondere für dynamisch belastete Dichtungsartikel (Dichtkörper), deren Aufgabe es ist, bei der Abdichtung bewegter Maschinenteile zwei Räume, die eine gemeinsame bewegte Grenzfläche aufweisen, den Austausch von Flüssigkeiten und/oder Gasen zu verhindern bzw. zu minimieren, ist eine Optimierung zwischen Abriebfestigkeit, Reibungsreduktion, Wärmeleitfähigkeit, Temperaturstabilität, chemischer Stabilität und Elastizität des Dichtkörpers wünschenswert. Typischerweise kann eine entsprechende Dichtung mit Hilfe von Kolbenringen, O-Ringen, Dichtkantenringen, Radial-Wellendichtringen, Schwimmring-Spaltdichtungen, Gleitringdichtungen oder Labyrinthdichtungen gelöst werden. Für den eigentlichen Dichtkörper bieten sich elastomere und/oder polymere Materialien an. Diese alleine eingesetzt besitzen zwar die notwendige Elastizität, allerdings oft nicht die erwünschte Verschleißfestigkeit und/oder den erwünschten Reibwert und/oder die erwünschte Oberflächenenergie für den Einsatz entsprechender gleitfördernder Mittel. Dementsprechend wurden in der Vergangenheit bereits Ansätze bekannt, mittels derer die Verschleiß- und/oder Dichteigenschaften von elastomeren und/oder polymeren Dichtungsartikeln durch eine zusätzliche Beschichtung verbessert werden sollten.

Chemisch abweisende, niederenergetische plasmapolymere Beschichtungen, insbesondere solche aus siliziumorganischen Precursoren, sind schon seit vielen Jahren bekannt. Sie zeigen Easy-to-clean-Eigenschaften (WO 03/002269 A1), sie können als Trennschicht agieren (DE 100 34 737 A1) und sie können sogar trotz ihres dreidimensionalen Vernetzungscharakters elastomere Eigenschaften aufweisen (WO 2007/118905 A1). Einfache Trennschicht-Beschichtungen fanden Anwendung als Anti-Tack-Beschichtung von Gummiwerkstoffen, um deren "Klebrigkeit" zu reduzieren, beispielsweise um das leichte, reproduzierbare Ablösen eines Ventils aus dem Ventilsitz oder die leichte Montage von O-Ringen zu ermöglichen. Durch die Vermeidung der Oberflächenklebrigkeit sind auch die Gleitreibungseigenschaften als Festkörper-Festkörper-Reibung reduziert. Dies macht sich insbesondere bei sehr geringen Anpressdrücken positiv bemerkbar. Erhöhten mechanischen Verschleißansprüchen können viele dieser Schichten nicht gerecht werden. Bei erhöhten Anpressdrücken an den Reibungspartner, wie sie für Gleitringdichtungen verwendet werden, versagen diese Schichtsysteme schnell, insbesondere ein Adhäsionsverschleiß tritt ein.

Andere Anwendungsbereiche dieser Art Dünnschichten, die erhöhte Anforderungen an die mechanische Stabilität stellen, wie z.B. Antihaftbeschichtungen für Pfannen, Brotbackformen oder Teile für Maschinen, blieben ihnen verschlossen. Ihre mechanische Gebrauchsstabilität ist nicht ausreichend. Mechanisch beständige Beschichtungen aus dieser Materialgruppe sind vielmehr SiO₂-ähnlich und benötigen Schichtdicken von 2 - 8 µm, je nach Anwendung und Substrat.

Darüber hinaus ist auch bekannt, dass die Gleiteigenschaften der niederenergetischen, siliziumorganischen Schichten trotz der oben beschriebenen Verbesserung in vielen Fällen schlecht sind, so dass in DE 10 2005 052 408 A1 eine Beschichtung mit integriertem Gleitmitteldepot beschrieben worden ist. Dieses ist jedoch aufgrund des geringen Mengengehaltes für einen dauerhaften Einsatz in einer dynamisch belasteten Dichtung nicht geeignet.

Ferner ist aus DE 10 2004 010 498 A1 bekannt, feststehende Dichtringe eines Pumpenkolbens mit einer überwiegend aus DLC (Diamond Like Carbon) bestehenden Beschichtung zu versehen, um die Verschleißfestigkeit zu erhöhen und die Reibwerte zu verbessern. Nähere Angaben zur stofflichen Gestaltung der Beschichtung auf dem Elastomeren oder zu den Eigenschaften der Beschichtung finden sich nicht. In den Ausführungsbeispielen findet man jedoch sowohl den Hinweis auf eine hohe thermische Belastung während der Beschichtung, als auch Hinweise auf Prozessgase wie Acetylen, Methan oder deren Gemische. Hieraus wird der Fachmann schließen, dass hier auch auf dem Dichtring klassische, reibungsmindernde Verschleißschutzschichten abgeschieden werden.

In anderen Veröffentlichungen, wie z. B. DE 103 52 674 A1, wird das Elastomer, zumindest im Dichtbereich, mit einen aushärtbaren Stoff überzogen, der reibungsreduzierende Elemente enthält. Hier wird insbesondere PTFE genannt. Wieder andere Lösungen bevorzugen einen Gleitlack.

In ähnliche Richtung weist die DE 198 39 502 A1, bei der für einen elastomeren Dichtkörper mit Doppeldichtlippe, die stärker andrückende Dichtlippe mit PTFE-Folie belegt wird.

Aus der DE 10 2005 025 253 A1 und der DE 10 2005 041 330 A1 sind Ansätze bekannt, Dichtungen aus elastomeren Formkörpern einzusetzen, deren Oberflächen mittels Plasmapolymer-Technik modifiziert werden und auf die entsprechenden Schichten abgeschieden werden. DE 10 2005 041 330 A1 betrachtet die Oberflächenmodifikation mittels Plasmapfropfung und die in DE 10 2005 025 253 A1 offenbarten Schichten sind zum Teil nicht ausreichend spezifiziert. Sofern dies aber der Fall ist, weisen sie insbesondere in ihrem Abriebverhalten und/oder ihrer Oberflächenenergie für den gewünschten Einsatz nicht optimale Eigenschaften auf.

Vor dem Hintergrund des bereits bekannten Standes der Technik war es Aufgabe der Erfindung, einen Dichtungsartikel anzugeben, der für dynamische Belastungen ein gegenüber dem Stand der Technik verbessertes Gesamteigenschaftsprofil besitzt. Zu verbessernde Eigenschaften waren in diesem Zusammenhang insbesondere das Erreichen einer höheren Verschleißfestigkeit, das Verlängern der Lebensdauer, das Erhöhen der Temperaturbeständigkeit, das Erhöhen der Benetzbarkeit insbesondere für gleitfördernde Mittel und/oder das Verbessern des Leckage- und/oder Reibverhaltens. Dabei sollten die genannten Verbesserungen bevorzugt für Einsatzbereiche mit einer Mangelschmierung im Dichtungsbereich und/oder bei typischen Anpressdrücken im Bereich von 0,05 bis 5 N/mm² eintreten.

Diese Aufgabe wird gelöst durch einen Dichtungsartikel, umfassend ein elastomeres und/oder polymeres Substrat und eine darauf angeordnete plasmapolymere Beschichtung bestehend aus Kohlenstoff, Silizium, Sauerstoff, Wasserstoff und (i) Fluor oder (ii) keinem Fluor sowie gegebenenfalls üblichen Verunreinigungen, wobei für die Stoffmengenverhältnisse in der plasmapolymeren Beschichtung gilt:

| | | | |
|---|---|---|---|
| 1,3 : 1 | ≤ n(O) : n(Si) | ≤ | 3,0 : 1 |
| 0,3 : 1 | ≤ n(C) : n(Si) | ≤ | 5,0 : 1 und bevorzugt |
| 0,5 : 1 | s (n(H) + n(F)) : n(C) | ≤ | 3,0 : 1, bevorzugt ≤ 2,5 (insbesondere wenn in der Beschichtung kein Fluor enthalten ist). |

Die erfindungsgemäß auf dem elastomeren Substrat vorgesehenen Schichten sind teilweise aus der WO 03/002269 bekannt. Es findet sich aber keinerlei Hinweis auf den Einsatz der Schichten im Zusammenhang mit Elastomeren, insbesondere nicht auf die überraschend hohe Abriebwiderstandsfähigkeit im Zusammenhang mit elastomeren und/oder polymeren Dichtungsartikeln (Dichtkörpern), weiter insbesondere solchen, die dynamischen Belastungen ausgesetzt sind.

Eine "plasmapolymere Schicht" bzw. Beschichtung ist im Rahmen dieses Textes eine Schicht, welche mittels Plasmapolymerisation herstellbar ist. Plasmapolymerisation ist ein Verfahren, bei dem sich gasförmige Precursoren (oft auch Monomere genannt), angeregt durch ein Plasma, auf einem frei wählbaren Substrat als hochvernetzte Schicht niederschlagen. Voraussetzung für eine Plasmapolymerisation ist das Vorhandensein von kettenbildenden Atomen wie Kohlenstoff oder Silizium im Arbeitsgas. Durch die Anregung werden die Moleküle der gasförmigen Substanz (Precursoren), durch den Beschuss mit Elektronen und/oder energiereichen Ionen fragmentiert. Dabei entstehen hochangeregte radikalische oder ionische Molekülfragmente, die miteinander im Gasraum reagieren und auf der zu beschichtenden Oberfläche abgeschieden werden. Auf diese abgeschiedene Schicht wirkt die elektrische Entladung des Plasmas und dessen intensiver Ionen- und Elektronenbeschuss fortwährend ein, so dass in der abgeschiedenen Schicht weitere Reaktionen ausgelöst und eine hochgradige Verknüpfung der abgeschiedenen Moleküle erzielt werden kann.

Im Rahmen des vorliegenden Textes umfasst der Begriff "plasmapolymeren Schicht" auch Schichten, die mittels plasmaunterstützter CVD (PE-CVD) hergestellt werden können. Hierbei wird zur Reaktionsführung das Substrat zusätzlich erwärmt. So lassen sich beispielsweise aus Silan und Sauerstoff SiO₂-Beschichtungen herstellen. Ferner sei ausdrücklich erwähnt, dass auch Atmosphärendruckplasmaverfahren zur Herstellung erfindungsgemäß einzusetzender plasmapolymerer Schichten verwendet werden können, wenngleich Niederdruck-Plasmapolymerisationsverfahren derzeit bevorzugt sind.

Im Rahmen des vorliegenden Textes werden Substanzen, die zur Schichtbildung über eine Plasmapolymerisation als Gas bzw. Dampf einem Plasma zugeführt werden, als "Monomere" (gasförmige Precursoren) bezeichnet. Als "flüssige Precursoren" werden Flüssigkeiten bezeichnet, welche beispielsweise durch die Einwirkung eines Plasmas vernetzt werden können (beispielsweise durch hochangeregte Teilchen, Elektronen oder UV-Strahlung), ohne vorher zu verdampfen.

Die Stoffmengenverhältnisse für die erfindungsgemäß einzusetzende Beschichtung werden dabei mittels ESCA (electron spectroscopy for chemical analysis), oft auch XPS-Untersuchung genannt (XPS = x-ray photoelectron spectroscopy), bevorzugt ermittelt. Besonders bevorzugt bezieht sich die ESCA-Messung auf die vom Substrat abgewandte Seite der Beschichtung.

Für die Bestimmung der Wasserstoffanteile wird statt ESCA bevorzugt eine Mikroelementaranalyse für Wasserstoff und Kohlenstoff eingesetzt, so dass somit das Verhältnis von Kohlenstoff zu Wasserstoff ermittelt wird. Bei der Auswertung der Daten sollte der Fachmann ferner berücksichtigen, dass mittels FTIR kein bzw. nur ein sehr geringes Si-H - Signal gemessen werden kann, so dass der Wasserstoff ausschließlich dem Kohlenstoff als Bindungspartner zuzuordnen ist.

Die bei der ESCA-Messung beobachtbare Verschiebung des Si 2p Peaks bzw. des O 1s Peaks gibt einen Hinweis auf den Vernetzungsgrad innerhalb der plasmapolymeren Beschichtung. Ein trimethylsiloxy-terminiertes Polydimethylsiloxan (PDMS) mit einer kinematischen Viskosität von 350 mm²/s bei 25 °C und einer Dichte von 0,970 g/mL bei 25 °C ist das Produkt DMS-T23E der Firma Gelest.

Für die Peak-Verschiebungsbestimmung wird die Kalibrierung des Messgerätes - wie erwähnt - so vorgenommen, dass der aliphatische Anteil des C 1s Peaks bei 285,00 eV liegt. Aufgrund von Aufladungseffekten wird es in der Regel notwendig sein, die Energieachse ohne weitere Modifikation auf diesen Fixwert zu verschieben. Zur Durchführung der ESCA-Messungen insbesondere im Hinblick auf die Peakverschiebung wird ausdrücklich auch auf die WO 2007/118905 hingewiesen.

Übliche Verunreinigungen im Sinne der vorliegenden Erfindung sind Elemente außer den vorgenannten Elementen O, Si, C, H und F, die aufgrund des Beschichtungsprozesses (im Regelfall Plasmaprozesses) in die Beschichtung eingebaut werden, und aus dem elastomeren und/oder polymeren Substrat stammen. Dabei beträgt der Anteil dieser üblichen Verunreinigungen bevorzugt ≤ 10 Atom-%, weiter bevorzugt ≤ 5 Atom-%, besonders bevorzugt ≤ 2 Atom-% und ganz besonders bevorzugt ≤ 1 Atom-% bezogen auf die Summe aller in der plasmapolymeren Beschichtung enthaltenen Atome. Es sei noch einmal betont, dass zu den üblichen Verunreinigungen ausdrücklich nicht die Anteile von Kohlenstoff, Silizium, Sauerstoff, Wasserstoff und Fluor zählen, die ebenfalls aus dem zu beschichtenden Substrat stammen. Beispiele für übliche Verunreinigungen sind Natrium und Zink.

Erfindungsgemäß bevorzugt ist ein Dichtungsartikel, der für dynamische Belastung geeignet ist. Die Aufgabe dynamisch belasteter Dichtungsartikel ist bereits weiter oben definiert. Damit ein Dichtungsartikel für eine dynamische Belastung geeignet ist, wird der Fachmann eine entsprechende Substratauswahl vornehmen. Bevorzugte Substrate sind weiter unten angegeben. Darüber hinaus würde der Fachmann selbstverständlich auch die räumliche Ausgestaltung des Dichtungsartikels so wählen, dass er an seine Funktion angepasst ist. Typische Ausbildungsformen solcher Dichtungsartikel sind ebenfalls weiter oben angegeben.

Überraschenderweise hat sich herausgestellt, dass die Beschichtungen in erfindungsgemäßen Dichtungsartikeln als ausgesprochen haltbar erweisen. Dies gilt sogar unter den Bedingungen dynamischer Belastungen. Dabei wird es in vielen Fällen bevorzugt sein, die Beschichtung ohne Fluor herzustellen, da für die Verwendung von Fluor aufgrund der Agressivität dieses Elementes ein erhöhter apparativer Aufwand notwendig ist. In vielen anderen Fällen wird es jedoch oft bevorzugt sein, Fluor einzusetzen, um sich die besonderen Eigenschaften von Fluor dienlich zu machen.

In vielen Fällen ist überraschenderweise das Verhältnis von Sauerstoff zu Silizium von Bedeutung für die Eigenschaften der plasmapolymeren Beschichtung im erfindungsgemäßen Dichtungsartikel. Das Verhältnis Kohlenstoff zu Silizium kann bei einem ausreichenden Eigenschaftsprofil über einen verhältnismäßig breiten Bereich schwanken. Dabei ist zu berücksichtigen, dass im Regelfall während des Beschichtungsverfahrens auf ein kohlenstoffhaltiges Substrat nicht unerhebliche Teile Kohlenstoff aus dem Substrat in die Beschichtung eingebaut werden. Es hat sich aber gezeigt, dass das Eigenschaftsprofil der Beschichtungen insbesondere im Rahmen des Einsatzes für Dichtungsartikel mit dynamischen Belastungen sich verbessert, wenn sich das Verhältnis Kohlenstoff zu Silizium ausgehend von 5 verringert.

Die Beschichtung auf dem erfindungsgemäßen Artikel umfasst bevorzugt ggf. ebenfalls ein Stoffmengenverhältnis von O : Si ≥ 1,4 und bevorzugt ≤ 2,6 und weiter bevorzugt < 2,3.

Das Verhältnis C : Si ist bevorzugt ≥ 0,5, wiederum bevorzugt ≥ 0,6 und ggf. ebenfalls bevorzugt ≥ 3,0, und jeweils weiter bevorzugt ≤ 1,8, ≤ 1,7, ≤ 1,6.

Das Verhältnis (H + F) : C ist bevorzugt ≥ 0,7 und gleichzeitig < 2,5, weiter bevorzugt < 2,3 und weiter bevorzugt < 2,0.

Bei den im Rahmen dieses Textes genannten Stoffmengenverhältnisse handelt es sich jeweils um die Verhältnisse der Atomzahlen der einzelnen Elemente zueinander, sofern nicht anders angegeben.

In bevorzugten Beschichtungen ist der Si 2p Peak unter den oben genannten Voraussetzungen um mehr als 0,4, bevorzugt mehr als 0,45, weiter bevorzugt mehr als 0,5 eV zu höheren Bindungsenergien verschoben und/oder der O 1s Peak um mehr als 0,5 eV zu höheren Bindungsenergien verschoben, jeweils im ESCA-Spektrum auf der vom Substrat abgewandten Seite der plasmapolymeren Schicht, bei Kalibrierung auf den aliphatischen Anteil des C 1s Peaks bei 285,00 eV, im Vergleich mit einem trimethylsiloxy-terminierten Polydimethylsiloxan (PDMS) mit einer kinematischen Viskosität von 350 mm²/s bei 25°C und einer Dichte von 0,97 g/mL bei 25°C.

Der Fachmann stellt die Stoffzusammensetzung und damit die Eigenschaften der plasmapolymeren Beschichtung primär z. B. über folgende Maßnahmen ein: Precursorart, Mischungsverhältnis der Precursoren, Prozessgase, Prozessdauer, Gasmischung bzw. dem Gasmischungsverhältnis. Er berücksichtigt dabei jedoch auch die Zusammensetzung des Substrates, weil aus diesem Anteile in die plasmapolymere Beschichtung eingebaut werden können.

Bei vorgegebener stofflicher Art des zu verarbeitenden Gases (Precursor) wird der Fachmann die Härte und die Vernetzung und daraus resultierend die entsprechenden Peakverschiebungen primär über das Verhältnis der Precursoren zueinander, die Gesamtgasmenge und die zur Aufrechterhaltung des Plasmas verwendete Leistung einstellen. Zu den Effekten dieser Maßnahmen und zu weiteren Hinweisen zur Verfahrensführung wird verwiesen auf ISBN 978-3-86727-548-4 "Aufskalierung plasmapolymerer Beschichtungsverfahren", Kapitel 2 und 7 von Dr. Klaus Vissing.

Bevorzugt ist ein erfindungsgemäßer Artikel, wobei die Oberflächenenergie der plasmapolymeren Beschichtung auf der vom Substrat abgewandten Seite 25 - 40 mN/m, ermittelt in einer dynamischen Kontaktwinkelmessung mit den Flüssigkeiten Wasser, Ethylenglykol, Dijodmethan, Glycol, n-Decan, Benzylalkohol und ausgewertet mit dem Verfahren nach Wu und/oder die Härte (gemessen mittels Nanoindentierung) der plasmapolymeren Beschichtung 1 - 5 GPa, vorzugsweise von 1,5 - 4 GPa beträgt. Lit. (Nanoindentierung): W.C. Oliver, G.M. Pharr, J. Mater. Res. 7 1564 (1992); A. C. Fischer-Cripps: Nanoindentation, Springer, New York (2002), G.M. Pharr, Mat. Sci. Eng. A 253 151 (1998), K.L. Johnson, Contact Mechanics, Cambridge University Press, Cambridge, (1985). Lit. (Kontaktwinkelmessung): John C. Berg, ed., Wettability, Marcel Dekker, 1993, 0824790464; Milan Johann Schwuger, Lehrbuch der Grenzflächenchemie, Georg Thieme Verlag, 1996, 3131375019.

Bevorzugt beträgt die Oberflächenenergie der Beschichtung des erfindungsgemäßen Artikels 25 bis 35 Nm/m und/oder die Härte 1,5 bis 4 GPa.

Besonders bevorzugt wird die Beschichtung so eingestellt, dass sie einen geringen E-Modul bei hoher Härte aufweist, so dass sie eine hohe elastische Verformbarkeit bei gleichzeitig hoher Härte zeigt. Als besonders geeignet haben sich Beschichtungen erwiesen, deren Quotient aus Härte und E-Modul ≥ 0,1, bevorzugt ≥ 0,11 ist. Dies kann besonders gut erreicht werden unter Verwendung von Plasmabeschichtungsvorrichtungen, die mit Frequenzen im MHz-Bereich arbeiten und kapazitiv einkoppeln. Dabei wird das Substrat vorzugsweise frei floatend im Reaktor angeordnet.

Durch den duromerähnlichen Aufbau der plasmapolymeren Schicht, deren Härte und deren geringen Reibungskoeffizienten wird der Adhäsionsverschleiß auf einem elastomeren und/oder polymeren Körpers deutlich verringert. Hierdurch kann der Verschleißkoeffizient, definiert als der Quotient aus dem abgetragenen Volumen V_{abt}. dividiert durch die Normalkraft F_{N} und der Lauflänge L, stark reduziert werden. Der Verschleißkoeffizient wird ≤ 3 * 10⁻³ mm³/N km, bevorzugt ≤ 3 * 10⁻⁴ mm³/N km, weiter bevorzugt ≤ 3*10⁻⁵ mm³/N km.

Der Fachmann kann die Oberflächenenergie und/oder die Härte z. B. durch folgende Maßnahmen beeinflussen: Veränderung des Anteils sauerstoffhaltiger Gase, die gewählte Gesamtgasmenge, die Leistung und eine Nachaktivierung der Oberfläche, wobei hier die schichtbildenden Precursoren für einen kurzen Zeitraum dem Plasma nicht mehr zugeführt werden, sondern nur noch nicht-sauerstoffhaltige Gase. Oft ist bevorzugt die Anzahl an polaren Gruppen in der Beschichtung respektive der Oberfläche zu erhöhen, so dass beispielsweise das Verhältnis von HMDSO zu O₂ zugunsten des O₂ verändert wird oder der Gesamtgasfluss bei gleichbleibender eingekoppelter Leistung reduziert (mehr Leistung pro Gasteilchen) oder die Leistung bei gleicher Gasmenge und Gaszusammensetzung erhöht wird. Auch Kombinationen dieser Maßnahmen sind möglich.

Letztendlich führen die im vorherigen Absatz beschriebenen Maßnahmen nicht nur zu einem erhöhten Einbau von Sauerstoff in die Beschichtung und damit zu einer höheren Oberflächenenergie, sondern auch zu einer Abnahme des Kohlenwasserstoffgehaltes. Die Vernetzungsbedingungen ändern sich, die Schichten werden härter und spröder. Der Fachmann kann dies beispielsweise mit Hilfe der FTIR-Spektroskopie, der ESCA-Analytik und der Nanoindentierung zur Härtemessung prüfen und über Verfahrensführung gezielt einstellen.

In den angegebenen Parameterfeldern (z.B. Oberflächenenergie und Härte) ist der erfindungsgemäße Artikel besonders geeignet, für die Verwendung in Systemen, wo der zu dichtende primäre Dichtspalt ein dynamischer Dichtspalt ist.

Bevorzugt ist ein erfindungsgemäßer Artikel, wobei die Beschichtung thermische Belastungen von bis zu 300 °C unbeschadet übersteht und bevorzugt für bis zu 5 Minuten auch eine Temperatur von 380 °C unbeschadet übersteht. Unbeschadet heißt in diesem Zusammenhang insbesondere, dass die Oberflächenenergie und die Zusammensetzung im FTIR-Spektrum, respektive in der XPS-Analytik unverändert bleiben.

Bevorzugt weist die Beschichtung eine Wärmeleitfähigkeit von 0,1 bis 1,3 W / m K auf. Diese wird wesentlich durch die stoffliche Zusammensetzung der Beschichtung bestimmt. Mit zunehmender Vernetzung, das heißt zunehmender Oberflächenenergie und Härte, steigt die Wärmeleitfähigkeit an.

Der Fachmann kann die thermische Beständigkeit z. B. durch die stoffliche Zusammensetzung und den Vernetzungsgrad beeinflussen. Die zu ergreifenden Maßnahmen sind vergleichbar mit denen zur Erhöhung der Härte. Hierzu wird zudem verwiesen auf z. B. ISBN 3-8265-9216-6 "Charakterisierung der spektroskopischen Eigenschaften von Metall- und Halbleiterclustern in plasmapolymeren Matrizen" von Dr. Dirk Salz, Kapitel 4.

Bevorzugt weist der erfindungsgemäße Dichtungsartikel einen Gleitreibungskoeffizienten (auch dynamischer Reibungskoeffizient) ≤ 0,25, bevorzugt ≤ 0,2 gegen Edelstahl (1,4301) auf. Der dynamische Reibungskoeffizient verringert sich, wenn der Sauerstoffanteil im Plasma und/oder die Leistung erhöht wird. Durch einen derart geringen dynamischen Reibungskoeffizienten wird der Verschleiß der Beschichtung deutlich reduziert. Ebenso wird der Einlaufverschleiß reduziert. Der Gleitreibungskoeffizient wird bevorzugt bestimmt gemäß Beispiel 1.

Bei der Bestimmung der Reibungseigenschaften wie Gleitreibungskoeffizient oder Haftreibungskoeffizient muss berücksichtigt werden, dass insbesondere bei erfindungsgemäßen Dichtungsartikeln, bei denen die erfindungsgemäß vorgesehene Beschichtung verhältnismäßig dünn ist, stets ein gesamtes System betrachtet wird, bei dessen Reibungseigenschaften nicht nur von der äußersten Beschichtung beeinflusst werden, sondern auch zusätzlich noch durch das Substrat. Damit sind dem Fachmann durch geeignete Kombinationen von Substrat und Beschichtung weitere Einstellmöglichkeiten gegeben, um bei den erfindungsgemäßen Dichtungsartikeln den erfindungsgemäß ermöglichten Gleitreibungskoeffizienten zu erhalten. Insbesondere kann es von Vorteil sein, wenn der erfindungsgemäße Artikel als Substrat ein Polymer umfasst, dass kein Elastomer ist, dass der Dichtungsartikel auf der vom Substrat abgewandten Seite der polymeren Beschichtung einen Gleitreibungskoeffizienten ≤ 0,25 besitzt.

Durch die Kombination des niedrigen dynamischen Reibungskoeffizienten und einer Oberflächenenergie, die eine Benetzung mit gleitfördernden Stoffen, wie z.B. Ölen oder Fetten zulässt, wird Trockenreibung so weit wie möglich unterdrückt.

Bevorzugt umfasst ein erfindungsgemäßer Artikel eine plasmapolymere Beschichtung, die bezogen auf 100 Atom-% für die Summe der Elemente Silizium, Sauerstoff und Kohlenstoff, enthält:

| | |
|---|---|
| Silizium | 12 bis 30 Atom-%, bevorzugt 22 bis 30 Atom-% |
| Sauerstoff | 16 bis 60 Atom-%, bevorzugt 28 bis 60 Atom-% |
| Kohlenstoff | 10 bis 69 Atom-%, bevorzugt 10 bis 50 Atom-%. |

Ein bevorzugter erfindungsgemäßer Artikel umfasst in seiner Beschichtung bezogen auf 100 Atom-% für die Summe der Elemente Silizium, Sauerstoff und Kohlenstoff im Rahmen der vorgenannten Angaben
jeweils als Minimalwert: 12, bevorzugt 14, weiter bevorzugt 18, weiter bevorzugt 22, weiter bevorzugt 23, und weiter bevorzugt 23,9 für Silizium und jeweils als Maximalwert: 30, bevorzugt 28 und weiter bevorzugt 26,1 Atom-% Si,
jeweils als Minimalwert: 16, bevorzugt 19, weiter 22, weiter bevorzugt 23, und weiter bevorzugt 23,9, besonders bevorzugt 25, noch weiter bevorzugt 31 und ganz besonders bevorzugt 34,2 und jeweils als Maximalwert: 60, bevorzugt 55 und weiter bevorzugt 50 Atom-% O und jeweils als Minimalwert: 10, bevorzugt 15, und weiter bevorzugt 20 und jeweils als Maximalwert: 69, bevorzugt 60, weiter bevorzugt 50, bevorzugt 45 und weiter bevorzugt 40,4 Atom-% C vermessen mit ESCA, bevorzugt auf der vom Substrat abgewandten Seite.

Es sei darauf hingewiesen, dass es jeweils besonders bevorzugt ist, dass, wenn im Rahmen dieses Textes Ober- und Untergrenzen für bestimmte Parameterbereiche unabhängig voneinander angegeben werden, bevorzugt der jeweils erstgenannte Wert der Untergrenze mit dem jeweils erstgenannten Wert der Obergrenze und analog für die weiter genannten Werte kombiniert wird.

Bevorzugt umfasst ein erfindungsgemäßer Artikel eine plasmapolymere Beschichtung, die einen Gradienten aufweist.

Einen Gradientenaufbau kann der Fachmann z. B. durch zeitliche Variation der Abscheidungsbedingungen wie z. B. Gaszusammensetzung, eingekoppelte Leistung und Gesamtgasmenge erzeugen. Der Gradient kann sich dabei sowohl auf die stoffliche Zusammensetzung als auch auf den Vernetzungsgrad bzw. die Härte innerhalb der Schicht beziehen.

Der Vorteil eines Gradientenaufbaus besteht darin, dass auf diese Weise eine Anbindung der Beschichtung an das Substrat wenigstens teilweise unabhängig von der resultierenden Oberflächenbeschaffenheit der Beschichtung (auf der vom Substrat abgewandten Seite) optimiert werden kann.

Darüber hinaus kann der Fachmann durch geeignete Vorbehandlung des Substrates z. B. mit Hilfe von (Plasma-)Reinigungs- und Aktivierungsmethoden die gewünschte Haftung zwischen Beschichtung und Substrat gewährleisten.

Bevorzugte Beispiele für ein elastomeres oder polymeres Substrat sind:
NR (Naturgummi), CR (Chloropren-Elastomer), IIR (Isobuten-Isopren-Elastomer), [H]NBR [Hydriertes] (Acrylnitril-Butadien-Elastomer), AU (Polyester-Urethan), EU (Polyether-Urethan), EPDM (Ethylen-Propylen-Dien-Elastomer), MQ (Methylen-Silikon-Elastomer), VMQ (Vinyl-Methyl-Silikon-Elastomer), PMQ (Phenyl-Methyl-Silikon-Elastomer), FMQ (Fluor-Methyl-Silikon-Elastomer), FKM (Fluor-Elastomer), FEPM (Tetrafluorethylen-Propylen-Elastomer), FFKM (Perfluor-Elastomer), PE (Polyethylen), PP (Polypropylen), TPU (Thermoplastisches Polyurethan),

Bevorzugt ist außerdem ein erfindungsgemäßer Artikel, wobei die Beschichtung auf der vom Substrat abgewandten Seite zusätzlich mit einer amorphen Kohlenwasserstoffbeschichtung (a-CH-Beschichtung) versehen ist.

Eine a-CH-Beschichtung zeichnet sich durch einen Anteil von ca. 20 - 40 % an sp³ - Hybridisierung des Kohlenstoffs aus. Allerdings lassen sich nahezu beliebige Verhältnisse zwischen sp³ und sp² - Hybriden einstellen und damit die Härte über weite Bereiche steuern. Steigt in einer solchen armorphen, wasserstoffhaltigen Schicht der sp³-Hybridenanteil an und nimmt der Wasserstoffanteil gleichzeitig ab spricht man auch von ta-CH- Beschichtungen. (siehe Fig. 29.7 in ISBN 978-3-527-40673-9, Low Temperature Plasmas (Vol. 2); edited by R. Hippler, H. Kersten, M. Schmidt, K.H. Schoenbach). Eine genaue Einteilung der DLC (Diamond like Carbon)-Schichttypen ist in der VDI-Richtlinie 2840 bzw. http://www.ist.fraunhofer.de/c-produkte/tab/komplett.html zu finden. (t)a-CH-Schichten sind Sonderformen von DLC-Schichten.

Eine a-CH-Beschichtung lässt sich insbesondere durch die Verwendung von PECVD-Prozessen mit Hilfe von kohlenwasserstoffhaltigen Precursoren wie C₂H₂, C₂H₄, C₂H₆ erzeugen. Weitere Informationen zu DLC-Beschichtungen finden sich im Diamond Films Handbook (2002).

Die Vorteile einer amorphen Kohlenwasserstoffbeschichtung mit ihren typischen Härten im Bereich 0,05 - 2000 HV liegen insbesondere darin, dass sich der Reibwert der Schichtoberfläche beeinflussen lässt: Durch den armorphen Aufbau sind solche Schichten vollständig kovalent gebunden. Hierdurch besitzen sie eine sehr geringe Adhäsionsneigung in Kontakt zu metallischen Kontaktpartnern und sind unter tribologischen Beanspruchungen besonders unter Misch- und Trockenreibungsbedingungen von Vorteil. Für den Einsatz auf Elastomeren sind insbesondere a-CH-Beschichtungen im für diese Beschichtungen unteren Härte- und Schichtdickenbereich (Härte < 1000 HV und Schichtdickenbereich bis 1 µm, vorzugsweise bis 0,5 µm) interessant, da sowohl das Elastomer, als auch eine siliziumorganische plasmapolymere Beschichtung deutlich geringere Härten aufweisen werden. Modifikationen von a-CH - Beschichtungen mit Si oder Si und O sind oft ebenfalls vorteilhaft, da sie die Oberflächenenergie erniedrigen können.

Erfindungsgemäß weiter bevorzugt ist außerdem ein erfindungsgemäßer Artikel, wobei die plasmapolymere Beschichtung mit CHₓF_{y} - artigen Gruppen (y = 2 oder 3) modifiziert ist, so dass für diesen Spezialfall die Zusammensetzung der plasmapolymeren Beschichtung aus Si, C, O, F und H besteht (ggf. mit üblichen Verunreinigungen). Um derartige Schichten herzustellen wird der Fachmann teilfluorierte Precursor verwenden. Vorzugsweise werden diese teilfuorierten Precursor zusätzlich, als auch in den letzten Prozessschritten verwendet.

Bevorzugt ist ein erfindungsgemäßer Artikel, wobei die Beschichtung des Substrates (gegebenenfalls einschließlich der a-CH-Beschichtung) eine Dicke von 1 bis 10000 nm, bevorzugt 10 bis 2000 nm, weiter bevorzugt 20 bis 1000 nm und besonders bevorzugt 50 bis 500 nm besitzt. Erfindungsgemäß bevorzugt ist jeweils ein Schichtaufbau als Gradientenschicht oder ein Mehrschichtaufbau, bei dem die Härte vom Substrat zur Beschichtungsoberfläche (der vom Substrat abgewandten Seite) gesteigert wird. Für bestimmte Anwendungen kann es dabei bevorzugt sein, dass bei einem Mehrschichtaufbau auch Stützschichten eingebaut werden.

Stützschichten sind solche, die in einem Schichtaufbau für einen stabilen mechanischen Unterbau sorgen und die eigentliche ggf. weichere Funktionsschicht tragen, so dass hier mechanische Last abgefangen und verteilt werden kann. Sie verbessern die mechanische Stabilität von Dünnschichtsystemen. Innerhalb der siliziumorganischen Beschichtungen wird der Fachmann den Anteil von Si-O - und/oder Si-CH₂-Si - Verbindungen für Stützschichten erhöhen.

Die Härte, der Vernetzungsgrad und die Oberflächenenergie der plasmapolymeren Schichten sind allgemein für solche mit hohem Sauerstoffanteil am höchsten. Umgekehrt verhält es sich mit der Flexibilität der Schichten, diese sind für Schichten mit niedrigem Sauerstoffanteil am höchsten.

Dem Fachmann ist bewusst, dass die Flexibilität des Dichtungsmaterials mit zunehmenden Vernetzungsgrad der Beschichtung und zunehmender Beschichtungsdicke abnehmen wird. Hierdurch wird er die Dichtigkeit beeinflussen.

Weiterhin kann der Fachmann die Oberflächenenergie und Härte der Beschichtung so wählen, dass eine einwandfreie Benetzung der Oberfläche mit den abzudichtenden Ölen bzw. Fetten gegeben ist, so dass eine gute elastohydrodynamische Schmierung gewährleistet ist.

Bevorzugt ist der erfindungsgemäße Artikel wie z. B. ein Radialwelldichtring, eine Kolbendichtung, eine Stangendichtung oder eine Gleitringdichtung.

Erfindungsgemäß bevorzugt ist, dass die plasmapolymere Beschichtung die Oberflächentopographie des elastomeren Substrates abbildet. Dies ist möglich aufgrund der besonderen Eigenschaften plasmapolymerer Schichten. Dabei ist es besonders bevorzugt, dass die Oberflächentopographie des elastomeren Substrates so ausgestaltet ist, dass eine Gleitmittelförderung mittels Mikropumpwirkung unterstützt wird.

Bevorzugte Gleitmittel sind Öle insbesondere Mineralöle, Ölmischungen, additivierte Öle, insbesondere Öle mit sogenannten friction modifiern; Schmierfette.

Die Mikropumpwirkung kann erzeugt werden durch die Beschichtung bereits vorstrukturierter Dichtungsflächen, wobei die Beschichtung die Strukturierung nachbilden muss. Es bietet sich an derartige Strukturen zu verwenden, wie sie auf einem unbeschichteten elastomeren Dichtflächen bereits nach der Einlaufphase mikroskopisch zu erkennen sind. Aber auch eine Schollenbildung der Beschichtung der Beschichtung auf der Elastomeroberfläche kann die Mikropumpwirkung unterstützen.

Die erfindungsgemäßen Artikel, insbesondere die bevorzugten Ausführungsformen, besitzen eine Oberflächenenergie, die eine flächige Benetzung mit den typischen Gleitmitteln wie z. B. Chemieölen, wie sie im Automobilbau eingesetzt werden, zu gewährleisten. Hierdurch ist ein Reibungssystem gegeben, welches sich von einer trockenen Festkörper-Festkörper-Reibung deutlich unterscheidet. Des Weiteren weisen die erfindungsgemäßen Artikel, insbesondere in bevorzugten Ausführungsformen, eine höhere Härte als das elastomere Substrat auf. Die Wärmeleitfähigkeit bevorzugter erfindungsgemäßer Schichten liegt im Bereich von 0,1 bis 0,2 W / m K und somit im Bereich vieler Elastomere. Ihre thermische Beständigkeit kann jedoch in den bevorzugten Ausführungsformen deutlich höher als die der Elastomere ausgestaltet sein. Aufgrund der dreidimensionalen Vernetzung von plasmapolymeren Schichten ist die Wärmeausdehnung innerhalb der Schicht geringer als die von Elastomeren. Sie besitzen darüberhinaus (abhängig von der Ausstattungsform) eine hohe chemische Beständigkeit und quellen nicht auf.

Im Gegensatz zu Hartstoffschichten sind die plasmapolymeren Schichten in erfindungsgemäßen Artikeln in der Lage schnellen, kurzhubigen axialen Bewegungen, die das Elastomer im Dichtungsbereich während des Einsatzfalles oft durchführen muss, zu folgen. Ihre Härte liegt über der der Elastomere und ihr Verschleißverhalten ist daher und wegen der für plasmapolymere Schichten typischen Vernetzung verbessert. Trotzdem verfügen sie über die notwendige Flexibilität.

Die geringe Oberflächenenergie der Beschichtung führt dazu, dass sich Ablagerungen von zersetztem Öl nicht so gut im Dichtspalt festsetzen können. Ferner können die erfindungsgemäßen einzusetzenden plasmapolymeren Beschichtungen nicht wie ein Elastomer verhärten und verspröden. Ebenso wird Blasenbildung (Blistering) zuverlässig vermieden.

Die im Stand der Technik beschriebenen plasmaähnlichen plasmapolymeren Beschichtungen (z. B. wie WO 2007/118905) und die vorbeschriebenen plasmapolymeren Trennschichten (z. B. DE 134 737 A1) sind insbesondere für die dynamischen Anwendungen deutlich schlechter als die erfindungsgemäß einzusetzenden Beschichtungen einzusetzen. Die erstgenannten Schichten sind zu weich und/oder weisen für viele heute übliche Gleitmittel eine zu geringe Oberflächenenergie auf. Für viele Mineralöle sind diese Schichten bereits oleophob.

Dementsprechend ist Bestandteil in der Erfindung auch die Verwendung einer plasmapolymeren Beschichtung wie sie als Beschichtung für die erfindungsgemäßen Artikel beschrieben ist, zur Verbesserung der dynamischen Belastbarkeit eines elastomeren Substrates.

Bestandteil der Erfindung ist ferner ein Verfahren zum Erzeugen eines Dichtungsartikels, umfassend die Schritte:
a) Bereitstellen eines elastomeren und/oder polymeren Substrates und
b) Abscheiden einer plasmapolymeren Schicht, wie oben für die erfindungsgemäßen Artikel definiert auf wenigstens einem Teil der Oberfläche des Substrates.

Bevorzugt umfasst das erfindungsgemäße Verfahren außerdem den Schritt:
c) Abscheiden einer amorphen Kohlenwasserstoffbeschichtung (a-CH-Beschichtung) auf die plasmapolymere Beschichtung auf der vom Substrat abgewandten Seite oder Modifizieren der plasmapolymeren Beschichtung auf der vom Substrat abgewandten Seite, so dass sie CHₓF_{y} - Gruppen mit
   x = 0, 1, 2 oder 3 und
   y = 3 - x umfasst.

Nachfolgend wird die Erfindung anhand von Beispielen näher erläutert, wobei die Beispiele nicht als Einschränkung der Erfindung zu verstehen sind:

### Beispiel 1:

Für Beispiel 1 wurde der Haftreibungskoeffizient mit Hilfe von klassischen Experimenten aus dem physikalischen Lehrbuch an der schiefen Ebene, bei dem ein gewogener Prüfkörper (X5CrNi18-9 mit polierter Oberfläche) auf die zu prüfende Gummiprüfplatte gelegt und der Winkel (gemessen gegen die Horizontale) ermittelt wurde, ab dem der metallische Prüfkörper durch die Schwerkraft aus dem Ruhezustand in die Gleitbewegung versetzt wurde.

Der Gleitreibungskoeffizient wurde durch Kraftmessungen mit Hilfe von Zugversuchen von gewogenen Stahlgewichten (Werkstoffbezeichnung: X5CrNi18-9 mit polierter Oberfläche) auf einer ebenen Gummiplatte ermittelt. Die Kraftmessung erfolgte in der horizontalen parallel zur Prüfplatte. Dabei wurde zunächst die Haftreibung überwunden und nur die Kraft vermessen, die notwendig war, den Prüfkörper in Bewegung zu halten.

Als Versuchsmaterial wurde eine NBR-Platte der Größe 80 x 200 mm mit einer Shore A - Härte zwischen 60 und 80 des Lieferanten Benien verwendet, welches mit Hilfe von Isopropanol an der Oberfläche sorgfältig gereinigt wurde. Eine Plasmaaktivierung des Substrates erfolgte mit einer H₂/O₂ - Mischung von 900/200 sccm für 300 sec und 2000 W. Alle Versuche wurden trocken ausgeführt.

Als Beschichtungen wurden unterschiedliche Schichtarten, nämlich zwei erfindungsgemäße Beschichtungen und eine elastomerartige plasmapolymere Beschichtung (nach WO 2007/118905) ausgewählt. Nähere Angaben finden sich in Tabelle 1 (Schicht 1 bis 3). Alle Beschichtungen waren wischfest auf der NBR-Oberfläche. Die Beschichtungen wurden durchgeführt in einer 1m³-Plasmaanlage mit seitlich angebrachten Stabelektroden (Beschreibung siehe ISBN 978-3-86727-548-4 "Aufskalierung plasmapolymerer Beschichtungsverfahren", Seite 21 - 26 von Dr. Klaus Vissing). Die Substrate waren frei floated in der Kammermitte eingebracht.

Schicht 3 zeichnet sich durch eine deutlich niedrigere Oberflächenenergie aus, als die Schichten 1 und 2. Beispielsweise lässt sich Schicht 3 nicht mehr mit handelsüblichen Motorenöl (Megol Motorenöl HD - C3 SAE 15W-40", Fa. Meguin) benetzen, die Oberfläche ist hierfür oleophob. Die beiden Schichtvarianten 1 und 2 lassen sich dagegen benetzen.

**Tabelle 1**

| **Schicht** | **Schichtart** | **Verhältnis HMDSO/O₂** | **Leistung [W]** | **Schichtdicke [nm]** | **Haftreibungs-koeffizient** | **Gleitreibungskoeffizient** |
|---|---|---|---|---|---|---|
| unbeschichtet | | | | | 1,96 | 1,91 |
| 1 | Easy-to-clean | 0,27 | 2500 | 323 | 0,25 | 0,19 |
| 2 | Easy-to-clean | 0,82 | 2200 | 165 | 0,30 | 0,28 |
| 3 | PDMS-artig (nicht erfindungsgemäß) | 3,5 | 700 | 400 | 0,48 | 0,29 |

Es zeigt sich, dass jede der verwendeten plasmapolymeren Schichten den Haft-, bzw. Gleitreibungskoeffizienten deutlich verbessert.

Die Schicht 2 unterscheidet sich von Schicht 1 ganz wesentlich durch die Schichtdicke und den höheren HMDSO-Anteil im Arbeitsgas. Dies führt zu einem erheblichen Anstieg der Reibungskoeffizienten. Offensichtlich ist eine Mindestschichtdicke notwendig, um die Elastomeroberfläche gut und vollständig zu bedecken.

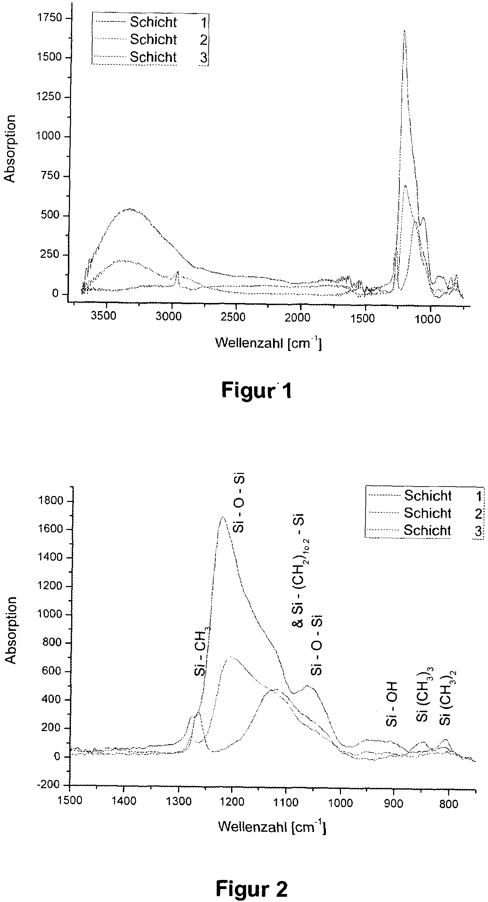

Schicht 3 ist am stärksten, Schicht 1 am wenigsten vernetzt. Dies kann anhand von ESCA (Tabelle 2) - und FTIR - Messungen (Figuren 1 und 2) nachvollzogen werden.

**Tabelle 2**

| **Schicht** | **Schichtart** | **O [at-%]** | **C [at-%]** | **Si [at-%]** |
|---|---|---|---|---|
| | | **O 1s Energiemax.** | **C 1s Energiemax.** | **Si 2p Energiemax.** |
| 1 | Easy-to-clean | 50,2 | 22,15 | 27,65 |
| | | 532,795 eV | 285,0 eV | 103,76 eV |
| 2 | Easy-to-clean | 40,8 | 33,85 | 25,35 |
| | | 532,663 eV | 285,0 eV | 103,562 eV |
| 3 | PDMS-artig (nicht erfindungsgemäß) | 27,5 | 48,0 | 24,5 |
| | | 532,531 eV | 285,0 eV | 102,836 eV |

- Figur 1: stellt ein FTIR-Spektrum der Schichten 1 bis 3 dar,
- Figur 2: stellt einen Ausschnitt aus einem FTIR-Spektrum der Schichten 1 bis 3 dar.

Vergleicht man die Schichten 1 und 3, die sich ganz wesentlich durch ihre Härte, Flexibilität und den Vernetzungsgrad unterscheiden, so erkennt man, dass die Schicht 1 die deutlich besseren Ergebnisse liefert. Insbesondere der Haftreibungskoeffizient ist deutlich verbessert.

### Beispiel 2:

Ein elastomerer Wellendichtring aus Viton ist mit einer ca. 350 nm dicken plasmapolymeren Gradientenbeschichtung versehen worden. Die Abscheidung ist gemäß Tab. 3 ohne BIAS-Unterstützung erfolgt in einer 5 m³ Anlage (Beschreibung siehe ISBN 978-3-86727-548-4 "Aufskalierung plasmapolymerer Beschichtungsverfahren", Seite 21 -26 von Dr. Klaus Vissing). Hierdurch wurde die Lebensdauer des Wellendichtrings mehr als verdoppelt und die Leckage reduziert.

**Tabelle 3**

| | Teilschritt 1 | Teilschritt 2 | Teilschritt 3 | Teilschritt 4 | Teilschritt 5 |
|---|---|---|---|---|---|
| Gasfluss O₂ (cm³/min) | 200 | | | 20 | 100 |
| Gasfluss H₂ (cm³/min) | 900 | 200 | 200 | 200 | |
| Gasfluss HMDSO (cm³/min) | | | 27 | 27 | 27 |
| Leistung (W) | 2000 | 1000 | 1000 | 1600 | 2500 |
| Druck (mbar) | 0,045 | 0,025 | 0,025 | 0,023 | 0,023 |
| Zeit (sec) | 300 | 60 | 60 | 180 | 2400 |

### Beispiel 3:

In diesem Beispiel wird eine dickere Beschichtung von ca. 1055 nm abgeschieden und untersucht. Die Beschichtungsparameter sind in Tabelle 4 wiedergegeben, Beschichtungsanlage wie in Beispiel 1

**Tabelle 4**

| | Teilschritt 1 | Teilschritt 2 | Teilschritt 3 | Teilschritt 4 | Teilschritt 5 | Teilschritt 6 |
|---|---|---|---|---|---|---|
| Gasfluss O₂(cm³/min) | 200 | | | 20 | 100 | |
| Gasfluss H₂ (cm³/min) | 900 | 200 | 200 | 200 | | 900 |
| Gasfluss HMDSO (cm³/min) | | | 27 | 27 | 27 | |
| Leistung (W) | 2000 | 1000 | 1000 | 1600 | 2500 | 300 |
| Druck (mbar) | 0,045 | 0,025 | 0,025 | 0,023 | 0,023 | 0,055 |
| Zeit (sec) | 300 | 60 | 60 | 180 | 8400 | 300 |

### Härte- und E-Modulmessung

Die Schichthärte und ihr E-Modul sind mittels Nanoindentation gemessen worden. Die Härte betrug 2,74 GPa, der E-Modul 24,7 GPa. Hieraus ergibt sich eine Verhälnis von Härte zu E-Modul von 0,111 (Die Messmethode ist beschrieben in der WO 2009/056635, Beispiel 2).

### Oberflächenenergie (disperser und polarer Anteil)

Die Oberflächenenegie ist mittels dynamischer Kontaktwinkelmessung mit einem Gerät G2 der Fa. Krüss vorgenommen worden. Hierfür wurden 6 verschiedene Flüssigkeiten ausgewählt. Nähere Angaben zu den Flüssigkeiten und den Randwinkeln finden sich in Tabelle 5. Die Auswertung der Oberflächenenergie erfolgt nach dem Verfahren von Wu. Bei der Kontaktwinkelmessung wurde an Luft bei 20°C gemessen. Das Tropfenvolumen betrug bis 6µl und wurde mit 11,76 µl/min dosiert. Es erfolgte eine automatische Konturanalyse auf beiden Seiten des Tropfens unter Verwendung einer Standarttropfenform und einer linearen Basislinie. Das Gerät bildete den harmonischen Mittelwert des Kontaktwinkels. In die weiteren Berechnungen werden nur Kontaktwinkel unter Berücksichtigung einer Intervalbreite von 68,3% basierend auf dem Mittelwert berücksichtigt.

Hieraus ergibt sich eine Oberflächenenergie von 29,71 ± 0,38 mN/m mit einem dispersen Anteil von 23,52 ± 0,21 mN/m und einem polaren Anteil von 6,19 ± 0,16 mN/m.

**Tabelle 5**

| | Oberflächenenergie der Flüssigkeit [mN/m] | Disperser Anteil der Flüssigkeit [mN/m] | Polarer Anteil der Flüssigkeit [nN/m] | Randwinkel [°] | Fehler [°] |
|---|---|---|---|---|---|
| Ethylenglykol | 47,7 | 30,9 | 16,8 | 64,3 | 0,24 |
| Dijodmethan | 50,8 | 50,8 | 0,0 | 73,4 | 0,76 |
| Wasser | 72,8 | 21,8 | 51,0 | 95,0 | 0,51 |
| Glycol | 63,4 | 37,0 | 26,4 | 80,3 | 0,72 |
| n-Decan | 23,9 | 23,9 | 0,0 | 79,7 | 1,47 |
| Benzylalkohol | 38,9 | 29,0 | 9,9 | 42,2 | 0,13 |

### ESCA - Analyse

Die ESCA - Analyse dieser Beschichtung zeigt folgende Elementzusammensetzung auf:

| | |
|---|---|
| Si | 28,1 at% |
| C | 22,4 at% |
| O | 49,5 at% |

Hieraus ergeben sich folgende Stoffmengenverhältnisse:
n(O) : n(Si) = 1,76
n(C) : n(Si) = 0,80

Die Maximumenergielage des Siliziumpeaks liegt nach der Korrektur auf 285 eV für den Kohlenstoffpeak bei 103,5 eV, für den Sauerstoffpeak bei 533,0 eV. Hieraus ergibt sich im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25°C, eine Verschiebung von 0,81 eV zu höheren Energien für die Siliziumpeak und von 0,54 eV zu höheren Energien für den Sauerstoffpeak.

### Beispiel 4

Zur Überprüfung des Beschichtungserfolges wurden Simmerringe verschiedener Bauart und ggf. mit unterschiedlicher Vorbehandlung beschichtet und der Beschichtungserfolg nachfolgend mit ESCA-Messungen (Doppelmessung an zwei Positionen) überprüft. Simmerring 4a besteht aus NBR (Nitril Buthyl Rubber). Der Simmerring ("dünn") besteht aus FKM (Fluorkautschuk).

Die Beschichtung erfolgte mit Parametern aus Beispiel 3. Als Referenzwerte dienten zum einen das Öl AK 100 000 der Fa. Wacker Chemie.

Die Ergebnisse sind in Tabelle 6a und 6b abgedruckt.

**Tabelle 6a**

| **Substrat** | **Pos.** | **0 1s** | **C 1s** | **Si 2p** | **C/Si** | **O/Si** | **Summe** |
|---|---|---|---|---|---|---|---|
| Simmerring 4a, mit IPA abgespült | 2 | 34,88 | 48,51 | 16,00 | 3,03 | 2,18 | 99,86 |
| Simmerring 4a, mit IPA abgespült | 1 | 32,49 | 52,16 | 14,47 | 3,60 | 2,25 | 99,80 |
| Simmerring 4a, mit IPA abgespült | Mittelwert | **33,69** | **50,34** | **15,24** | **3,30** | **2,21** | **99,83** |
| Simmerring 4a, mit n-Hexan abgespült | 1 | 33,41 | 49,76 | 15,85 | 3,14 | 2,11 | 99,90 |
| Simmerring 4a, mit n-Hexan abgespült | 2 | 34,32 | 47,73 | 17,07 | 2,80 | 2,01 | 99,88 |
| Simmerring 4a, mit n-Hexan abgespült | Mittelwert | **33,87** | **48,75** | **16,46** | **2,96** | **2,06** | **99,89** |
| Simmerring 4a | 2 | 32,24 | 47,52 | 19,13 | 2,48 | 1,69 | 99,37 |
| Simmerring 4a | 1 | 34,47 | 44,02 | 20,05 | 2,20 | 1,72 | 99,19 |
| Simmerring 4a | Mittelwert | **33,36** | **45,77** | **19,59** | **2,34** | **1,70** | **99,28** |
| Simmerring (dünn) | 1 | 34,05 | 45,64 | 19,48 | 2,34 | 1,75 | 100,00 |
| Simmerring (dünn) | 2 | 34,23 | 45,49 | 19,68 | 2,31 | 1,74 | 100,00 |
| Simmerring (dünn) | Mittelwert | **34,14** | **45,57** | **19,58** | **2,33** | **1,74** | **100,00** |
| AK100 000 | 1 | 23,93 | 52,63 | 23,44 | 2,25 | 1,02 | 100,00 |
| AK100 000 | 2 | 24,04 | 52,55 | 23,41 | 2,24 | 1,03 | 100,00 |
| AK100 000 | Mittelwert | **23,99** | **52,59** | **23,43** | **2,25** | **1,02** | **100,00** |
| Simmerring 4a, gereinigt | 2 | 16,16 | 80,99 | 2,33 | 34,76 | 6,94 | 99,75 |
| Simmerring 4a, gereinigt | 1 | 17,48 | 79,98 | 2,05 | 39,01 | 8,53 | 99,67 |
| Simmerring 4a, gereinigt | Mittelwert | **16,82** | **80,49** | **2,19** | **36,75** | **7,68** | **99,71** |

**Tabelle 6b**

| | **Peakposition,** gemessen (eV) | | | **Peakposition,** korrigiert auf C1s = 285 eV | | | **Mittelwert der Abweichungen des Si 2p-Peak gegenüber AK 100 000** | |
|---|---|---|---|---|---|---|---|---|
| **Substrat** | **C 1s** | **0 1s** | **Si 2p** | **C 1s** | **0 1s** | **Si 2p** | **Si 2p** | **Bemerkung** |
| Simmerring 4a, mit IPA abgespült | 281,87 | 529,52 | 100,17 | 285 | 532,65 | 103,30 | | Na: 0,14 |
| Simmerring 4a, mit IPA abgespült | 282,13 | 529,71 | 100,23 | 285 | 532,58 | 103,10 | | Na: 0,20 |
| Simmerring 4a, mit IPA abgespült | **282,00** | **529,62** | **100,20** | **285** | **532,62** | **103,20** | **0,45** | |
| Simmerring 4a, mit n-Hexan abgespült | 281,93 | 529,71 | 100,1 | 285 | 532,78 | 103,17 | | Na: 0,10 |
| Simmerring 4a, mit n-Hexan abgespült | 281,83 | 529, 38 | 100,03 | 285 | 532,55 | 103,20 | | Na: 0,10; Zn: 0,03 |
| Simmerring 4a, mit n-Hexan abgespült | **281,88** | **529,55** | **100,07** | **285** | **532,67** | **103,19** | **0,44** | |
| Simmerring 4a | 282,032 | 529,65 | 100,5 | 285 | 532,62 | 103,47 | | Zn: 0,63 |
| Simmerring 4a | 281,9 | 529,71 | 100,5 | 285 | 532,81 | 103,60 | | Zn: 0,80 |
| Simmerring 4a | **281,97** | **529,68** | **100,50** | **285** | **532,71** | **103,53** | **0,78** | |
| Simmerring (dünn) | 281,83 | 529,38 | 100,03 | 285 | 532,55 | 103,20 | | |
| Simmerring (dünn) | 281,83 | 529,52 | 99,97 | 285 | 532,69 | 103,14 | | |
| Simmerring (dünn) | **281,83** | **529,45** | **100,00** | **285** | **532,62** | **103,17** | **0,42** | |
| AK100 000 | 281,67 | 529,25 | 99,37 | 285 | 532,58 | 102,70 | | |
| AK100 000 | 281,9 | 529,58 | 99,7 | 285 | 532,68 | 102,80 | | |
| AK100 000 | **281,79** | **529,42** | **99,54** | **285** | **532,63** | **102,75** | | |

Die beschichteten Simmerringe zeigten im Einsatz eine wesentlich längere Lebensdauer. Auffällig ist der verhältnismäßig hohe Kohlenstoffanteil in den Beschichtungen, der darauf zurückgeführt werden kann, dass (neben anderen Elementen) Kohlenstoff aus dem Substrat mit in die Beschichtung eingebaut wurde.

## Patentansprüche

1. Dichtungsartikel, umfassend ein elastomeres und/oder polymeres Substrat und eine darauf angeordnete plasmapolymere Beschichtung bestehend aus Kohlenstoff, Silizium, Sauerstoff. Wasserstoff und (i) Fluor oder (ii) keinem Fluor sowie gegebenenfalls üblichen Verunreinigungen, wobei für die Stoffmengenverhältnisse in der plasmapolymeren Beschichtung gilt:
| | | | |
|---|---|---|---|
| 1,3 : 1 | ≤ n(O): n(Si) | ≤ | 3,0 : 1 |
| 0,3 : 1 | ≤ n(C) : n(Si) | ≤ | 5,0 : 1 und bevorzugt |
| 0,5 : 1 | ≤ (n(H) + n(F)) : n(C) | ≤ | 3,0 : 1. |

2. Dichtungsartikel nach Anspruch 1, wobei der Dichtungsartikel für dynamische Belastungen geeignet ist.

3. Dichtungsartikel nach Anspruch 1 oder 2, wobei im ESCA-Spektrum der plasmapolymeren Schicht, bei Kalibrierung auf den aliphatischen Anteil des C 1s s Peaks bei 285,00 eV, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C,
der Si 2p Peak einen Bindungsenergiewert besitzt, der um mehr als 0,4 eV zu höheren Bindungsenergien verschoben ist und/oder
der O 1s Peak einen Bindungsenergiewert besitzt, der um mehr als 0,50 eV zu höheren Bindungsenergien verschoben ist.

4. Artikel nach einem der vorangehenden Ansprüche, wobei der Dichtungsartikel auf der vom Substrat abgewandten Seite der plasmapolymeren Beschichtung einen Gleitreibungskoeffizienten ≤ 0,25 besitzt.

5. Artikel nach einem der vorangehenden Ansprüche, wobei die plasmapolymere Schicht gemessen mittels Nanoidentation eine Härte von 1,5 - 5 GPa und/oder ein E-Modul von 10 - 50 GPa besitzt und/oder
wobei die plasmapolymere Beschichtung auf der vom Substrat abgewandten Seite einen Wasserrandwinkel von 70° bis 100° und/oder einen Verschleißkoeffizienten ≤ 3*10⁻³ mm³/N km besitzt.

6. Artikel nach einem der vorangehenden Ansprüche, wobei die plasmapolymere Beschichtung bezogen auf 100 Atom-% für die Summe der Elemente Silizium, Sauerstoff und Kohlenstoff enthält:
| | |
|---|---|
| Silizium | 12 bis 30 Atom-% |
| Sauerstoff | 16 bis 60 Atom-% |
| Kohlenstoff | 10 bis 69 Atom-%. |

7. Artikel nach einem der vorangehenden Ansprüche, wobei für die plasmapolymere Beschichtung das Verhältnis von Härte zu E-Modul ≥ 0,1, vorzugsweise ≥ 0,11 ist und/oder wobei Oberflächenenergie der plasmapolymeren Beschichtung auf der vom Substrat abgewandten Seite 25 bis 40 mN/m beträgt.

8. Artikel nach einem der vorangehenden Ansprüche, wobei die plasmapolymere Beschichtung auf der vom Substrat abgewandten Seite mit einer zusätzlichen amorphen Kohlenwasserstoffbeschichtung (a-CH - Beschichtung) versehen ist.

9. Artikel nach einem der Ansprüche 1 bis 7, wobei die plasmapolymere Beschichtung auf der vom Substrat abgewandten Seite CHₖF_{y} - Gruppen mit
x=0,1, 2 oder 3 und
y = 3 - x umfasst und/oder
wobei die plasmapolymere Beschichtung eine Dicke von 1 - 10000 nm besitzt und/oder
wobei die plasmapolymere Beschichtung einen Gradientenaufbau aufweist.

10. Artikel nach einem der vorangehenden Ansprüche, wobei der Artikel ein Wellendichtring, insbesondere ein Radialwellendichtring, eine Kolbendichtung, eine Stangendichtung oder eine Gleitringdichtung ist.

11. Artikel nach einem der vorangehenden Ansprüche, wobei die plasmapolymere Beschichtung die Oberflächentopographie des elastomeren und/oder polymeren Substrates abbildet.

12. Artikel nach Anspruch 11, wobei die Oberflächentopographie so ausgestaltet ist, dass eine Gleitmittelförderung mittels Mikropumpwirkung unterstützt wird.

13. Verwendung einer plasmapolymeren Beschichtung wie in einem der vorangehenden Ansprüche definiert zur Verbesserung der dynamischen Belastbarkeit eines elastomeren und/oder polymeren Substrates.

14. Verfahren zum Erzeugen eines Dichtungsartikels, umfassend die Schritte:
a) Bereitstellen eines elastomeren und/oder polymeren Substrates und
b) Abscheiden einer plasmapolymeren Schicht, wie in einem der Ansprüche 1 - 7, 9 oder 11 definiert, auf wenigstens einen Teil der Oberfläche des Substrates.

15. Verfahren nach Anspruch 14, umfassend außerdem den Schritt:
c) Abscheiden einer amorphen Kohlenwasserstoffbeschichtung (a-CH-Beschichtung) auf die plasmapolymere Beschichtung auf der vom Substrat abgewandten Seite oder Modifizieren der plasmapolymeren Beschichtung auf der vom Substrat abgewandten Seite, so dass sie CHₓF_{y} - Gruppen mit
x = 0, 1, 2 oder 3 und
y = 3 - x umfasst.

## Claims

1. A sealing article, comprising an elastomeric and/or polymeric substrate and a plasma polymer coating arranged thereon consisting of carbon, silicon, oxygen, hydrogen and (i) fluorine or (ii) no fluorine, and also optionally usual impurities, wherein the following applies for the substance ratios in the plasma polymer coating:
| | | |
|---|---|---|
| 1.3 : 1 | ≤ n(O) : n(Si) | ≤ 3.0 : 1 |
| 0.3 : 1 | ≤ n(C) : n(Si) | ≤ 5.0 : 1 and preferably |
| 0.5 : 1 | ≤ (n(H) + n(F)) : n(C) | ≤ 3.0 : 1. |

2. A sealing article according to Claim 1, wherein the sealing article is suitable for dynamic loads.

3. A sealing article according to Claim 1 or 2, wherein in the ESCA spectrum of the plasma polymer layer, with calibration to the aliphatic portion of the C 1s peak at 285.00 eV, in comparison with a trimethylsiloxy-terminated polydimethylsiloxane (PDMS) with a kinematic viscosity of 350 mm²/s at 25°C and a density of 0.97 g/ml at 25°C,
the Si 2p peak has a bond energy value that is shifted by more than 0.4 eV to higher bond energies, and/or
the O 1s peak has a bond energy value that is shifted by more than 0.50 eV to higher bond energies.

4. An article according to one of the preceding claims, wherein the sealing article on the side of the plasma polymer coating remote from the substrate has a coefficient of sliding friction of ≤ 0.25.

5. An article according to one of the preceding claims, wherein the plasma polymer layer measured by means of nanoindentation has a hardness of 1.5 - 5 GPa and/or a modulus of elasticity of 10 - 50 GPa, and/or
wherein the plasma polymer coating has on the side remote from the substrate a water contact angle of 70° to 100° and/or a wear coefficient ≤ 3 * 10⁻³ mm³/N km.

6. An article according to one of the preceding claims, wherein the plasma polymer coating, in relation to 100 atom. % for the total of the elements silicon, oxygen and carbon, contains:
| | |
|---|---|
| silicon | 12 to 30 atom. % |
| oxygen | 16 to 60 atom. % |
| carbon | 10 to 69 atom. %. |

7. An article according to one of the preceding claims, wherein for the plasma polymer coating the ratio of hardness to modulus of elasticity is ≥ 0.1, preferably
≥ 0.11, and/or
wherein surface energy of the plasma polymer coating on the side remote from the substrate is 25 to 40 mN/m.

8. An article according to one of the preceding claims, wherein the plasma polymer coating on the side remote from the substrate is provided with an additional amorphous hydrocarbon coating (a-CH coating).

9. An article according to one of Claims 1 to 7, wherein the plasma polymer coating on the side remote from the substrate comprises CHₓF_{y} groups with
x = 0, 1, 2 or 3, and
y = 3 - x and/or
wherein the plasma polymer coating has a thickness of 1 - 10,000 nm
and/or
wherein the plasma polymer coating has a gradient structure.

10. An article according to one of the preceding claims, wherein the article is a shaft sealing ring, in particular a radial shaft sealing ring, a piston seal, a rod seal or a floating ring seal.

11. An article according to one of the preceding claims, wherein the plasma polymer coating reproduces the surface topography of the elastomeric and/or polymeric substrate.

12. An article according to Claim 11, wherein the surface topography is configured such that lubricant conveyance is supported by means of micropump action.

13. Use of a plasma polymer coating as defined in one of the preceding claims for improving the dynamic loadability of an elastomeric and/or polymeric substrate.

14. A method for producing a sealing article, comprising the steps:
a) provision of an elastomeric and/or polymeric substrate, and
b) deposition of a plasma polymer layer, as defined in one of Claims 1 - 7, 9 or 11, on at least part of the surface of the substrate.

15. A method according to Claim 14, furthermore comprising the step:
c) deposition of an amorphous hydrocarbon coating (a-CH coating) on the plasma polymer coating on the side remote from the substrate, or modification of the plasma polymer coating on the side remote from the substrate, so that it comprises CHₓF_{y} groups with
x = 0, 1, 2 or 3, and
y = 3 - x.

## Revendications

1. Article d'étanchéité comprenant un substrat en élastomère et/ou polymère et un revêtement de polymère plasma posé dessus qui est composé de carbone, de silicium, d'oxygène, d'hydrogène et (i) fluor ou sans (ii) fluor ainsi que des impuretés habituelles le cas échant, les proportions de matières dans le revêtement de polymère plasma étant les suivantes :
| | | | |
|---|---|---|---|
| 1,3 : 1 | ≤ n(O) : n(Si) | ≤ | 3,0 : 1 |
| 0,3 : 1 | ≤ n(C) : n(Si) | ≤ | 5,0 : 1 et de préférence |
| 0,5 : 1 | ≤ (n(H) + n(F)) : n(C) | ≤ | 3,0 : 1. |

2. Article d'étanchéité selon la revendication 1, l'article d'étanchéité convenant pour des charges dynamiques.

3. Article d'étanchéité selon la revendication 1 ou 2,
la pique Si 2p possèdant une valeur d'énergie de liaison décalée de plus de 0,4 eV vers des énergies de liaison plus élevées et/ou
la pique O 1s possèdant une valeur d'énergie de liaison décalée de plus de 0,50 eV vers des énergies de liaison plus élevées
dans le spectre ESCA de la couche de polymère plasma en cas de calibrage sur la proportion aliphatique de la pique C 1s à 285,00 eV, comparé à un polydiméthylsiloxane (PDMS) avec groupe terminal triméthylsiloxy présentant une viscosité cinématique de 350 mm²/s à 25 °C et une étanchéité de 0,97 g/mL à 25 °C.

4. Article selon l'une des revendications précédentes, l'article d'étanchéité possédant un coefficient de friction par glissement ≤ 0,25 sur la face du revêtement de polymère plasma non tournée vers le substrat.

5. Article selon l'une des revendications précédentes, la couche de polymère plasma mesurée par nanoidentation possédant une dureté de 1,5 à 5 Gpa et/ou un module E de 10 à 50 Gpa, et/ou
la couche de polymère plasma possédant un angle mouillant de 70° à 100° et/ou un coefficient d'usure ≤ 3 * 10⁻³ mm³/N km sur la face non tournée vers le substrat.

6. Article selon l'une des revendications précédentes, le revêtement de polymère plasma contenant :
| | |
|---|---|
| silicium | 12 à 30 % d'atome |
| hydrogène | 16 à 60 % d'atome |
| carbone | 10 à 69 % d'atome |
rapporté à 100 % d'atome pour la somme des éléments silicium, hydrogène et carbone.

7. Article selon l'une des revendications précédentes, le rapport entre dureté et module E étant ≥ 0,1, de préférence ≥ 0,11 pour le revêtement de polymère plasma, et/ou l'énergie superficielle du revêtement de polymère plasma atteignant 25 à 40 mN/m sur la face non tournée vers le substrat.

8. Article selon l'une des revendications précédentes, le revêtement de polymère plasma étant pourvu d'un revêtement supplémentaire de carbure d'hydrogène amorphe (revêtement a-CH) sur la face non tournée vers le substrat.

9. Article selon l'une des revendications 1 à 7, le revêtement de polymère plasma comprenant des groupes ChₓF_{y} avec
x = 0, 1, 2 ou 3 et
y = 3 - x
sur la face non tournée vers le substrat, et/ou
le revêtement de polymère plasma possédant une épaisseur de 1 à 10 000 nm
et/ou
le revêtement de polymère plasma présentant une structure de gradients.

10. Article selon l'une des revendications précédentes, l'article étant une bague à lèvres, en particulier une bague à lèvres radiales, une garniture de piston, un joint de tige ou une garniture étanche à anneau glissant.

11. Article selon l'une des revendications précédentes, le revêtement de polymère plasma reproduisant la topographie superficielle du substrat en élastomère et/ou polymère.

12. Article selon la revendication 11, la topographie superficielle étant configurée de telle sorte qu'un débit de lubrifiant par effet de micro-pompe soit favorisé.

13. Utilisation d'un revêtement de polymère plasma tel que défini dans l'une des revendications précédentes pour améliorer la charge dynamique admise par un substrat en élastomère et/ou polymère.

14. Procédé pour produire un article d'étanchéité, comprenant les étapes consistant à :
a) préparer un substrat en élastomère et/ou polymère et
b) déposer une couche de polymère plasma, telle que définie dans l'une des revendications 1 à 7, 9 ou 11, sur au moins une partie de la surface du substrat.

15. Procédé selon la revendication 14, comprenant d'autre part l'étape consistant à :
c) déposer un revêtement supplémentaire de carbure d'hydrogène amorphe (revêtement a-CH) sur le revêtement de polymère plasma sur la face non tournée vers le substrat ou modifier le revêtement de polymère plasma sur la face non tournée vers le substrat de manière à ce qu'il comprenne des groupes ChₓF_{y} avec
x = 0, 1, 2 ou 3 et
y=3-x.
